# EUROPEAN PATENT APPLICATION

(11) **EP 2 628 558 A1**
(43) Date of publication of application: **21.08.2013**
(21) Application number: 12155606.2
(22) Date of filing: 15.02.2012
(51) Int. Cl.: B23D 59/00

(54) **Diamond wire saw device and method**

(71) Applicant: Applied Materials Switzerland Sàrl, 1033 Cheseaux-sur-Lausanne (CH)
(72) Inventor: El Haddaoui, Najib, 74160 Saint-Julien en Genevois (FR)
(74) Representative: Zimmermann & Partner

(57) **Abstract**

A diamond wire saw device (100) for cutting an ingot (302, 304, 306, 308) is provided. The diamond wire saw device includes a diamond wire (230) adapted to be moved relatively to the ingot and a diamond wire defect detection system (1) configured to apply an alternating signal to the diamond wire (230). Further, a method for operating a diamond wire saw device for cutting an ingot is provided. The method includes applying an alternating signal to the diamond wire; and measuring the response signal of the diamond wire.

## Description

### FIELD OF THE INVENTION

Embodiments of the present invention relate to a diamond wire saw device, and a method for operating a diamond wire saw device. Existing diamond wire saws may be retrofitted with elements of the diamond wire saw device according to the present invention. More particularly, the invention relates to detecting defects, wear or breakage of a diamond wire of a diamond wire saw device. Wire saws of the present invention are particularly adapted for cutting or sawing hard materials such as blocks of silicon or quartz, e.g., for cutting silicon ingots, for a squarer, for a cropper or the like, in particular for further use in the semiconductors industries. Particularly, the present invention relates to squaring an ingot such as by means of the disclosed diamond wire saw device.

### BACKGROUND OF THE INVENTION

In semiconductor industries, thin wafers are needed for imprinting electrical circuits therein or depositing them thereon. Wire saws are used for cutting blocks, bricks or thin slices, e.g., semiconductor wafers, from a piece of hard material such as silicon. In such devices, a wire is fed from a spool and is both guided and tensioned by wire guide cylinders. The wire that is used for sawing is generally provided with an abrasive material.

As one option, the abrasive material can be provided as slurry. This may be done shortly before the wire touches the material to be cut. Thereby, the abrasive is carried to the cutting position by the wire used for cutting the material. The slurry includes a carrier material, such as oil or polyethylene glycol, with abrasive additives such as grains, e.g. silicon carbide grains. During operation, the slurry functions at the same time as cooling material.

As another option, the abrasive can be provided on the wire with a coating. A typical example, in particular for semiconductor wafering, is the diamond wire. For instance, diamond particles can be provided on a metal wire with a coating, wherein the diamond particles are imbedded in the coating of the wire. Thereby, the abrasive is firmly connected with the wire. During operation, it is necessary to cool the diamond wire, which is conventionally done with a water based liquid, possibly including some coolant additives.

If the wire breaks during the sawing process, it is of utter importance to detect the break as soon as possible after it has occurred and to stop the wire movement immediately. In the worst case, if a break occurs, unwanted consequences may arise. The loose ends of the wire may move around in the machine in an uncontrollable manner, which might harm the wire guide system or other parts of the machine. Further, if the wire breaks and moves on, it will be torn out of the object to be sawed.

In order to improve the cutting process, in a manner to minimize stopping of the machine, the detection of any malfunction of the wire sawing device, as fast as possible, is desired. In order to do so, various techniques are known in the art. For instance, it is known to operate an optical control for analyzing the wire quality and detecting a malfunction such as a crack or the like.

It is also known in the art to apply a direct voltage (DC) to the wire and measure the voltage, for instance, at the terminals of the wires. In the event of a breakage of the wire, the wire gets disconnected. The current through the wire is stopped, and the measured voltage corresponds to the applied voltage. It is also possible that the wire ends get into contact with conductive parts of the wire saw device, and a grounding or even a short circuit is caused.

However, the inventor found out that the wire breakage detection system based on DC may work for wire saws being provided with a slurry, however, this technique was not found sufficiently beneficial for diamond wire saw devices by the present inventor. In particular, the inventor found out that the wire suffers frequently from damage.

### SUMMARY

In view of the above, according to one aspect, diamond wire saw device for cutting an ingot by means of a diamond wire is disclosed. The diamond wire saw is adapted to move the diamond wire relatively to the ingot. The diamond wire saw device includes a diamond wire defect detection system configured to apply an alternating signal to the diamond wire.

According to a further aspect, a diamond wire saw device for cutting an ingot is disclosed. The diamond wire saw device includes a diamond wire adapted to be moved relatively to the ingot and a diamond wire defect detection system configured to apply an alternating signal to the diamond wire.

According to a further aspect, a method for operating a diamond wire saw device for cutting an ingot is provided. The diamond wire saw device includes a diamond wire. The method includes applying an alternating signal to the diamond wire; and measuring the response signal of the diamond wire.

According to yet a further aspect, a method for retrofitting a diamond wire saw device with a diamond wire defect detection system is provided. The diamond wire saw device includes a diamond wire. The method includes providing the diamond defect detection system configured to apply an alternating signal to the diamond wire and bringing the diamond wire defect detection system in electrical conductive contact with the diamond wire.

Further advantages, features, aspects and details are apparent from the dependent claims, the description and the drawings.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:

Fig. 1 shows a schematic perspective side view of a diamond wire saw device according to embodiments described herein.

Figs. 2-5 shows a schematic equivalent circuit diagram of a diamond wire saw device according to embodiment described herein.

Fig. 6 shows a schematic perspective side view of a diamond wire saw device according to embodiments described herein.

Fig. 7 shows a schematic perspective side view of a diamond wire saw device according to embodiments described herein.

Fig. 8 shows a schematic voltage-time diagram of the voltage applied to the diamond wire of a diamond wire saw according to embodiments described herein.

Fig. 9 shows a schematic voltage-time diagram of the voltage applied to the diamond wire of a diamond wire saw according to embodiments described herein.

Fig. 10 shows a schematic voltage-time diagram of the voltage applied to the diamond wire of a diamond wire saw according to embodiments described herein.

### DETAILED DESCRIPTION OF THE INVENTION

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

As described, the inventor found out that breakage detection systems as useful for slurry based wafer sawing, in particular a DC breakage detection system, have essential drawbacks if applied to diamond wire sawing. More particularly, diamond wires tend to early breakage when charged with a DC current during sawing. Detailed microscopy analysis of the diamond wire, undertaken by the inventor, led to the finding that the used diamond wire is partly covered, namely, due to nickel plating. As such, the surface of the diamond wire is irregular and exhibits plating protrusions that may extend massively. The protrusions result in a high resistance at the respective positions when the wire is moved through the ingot at high speed. Consequently, the wire at these positions is exposed to a high load. The fatigue is increased, and the wire tends to break earlier at these positions.

The inventors further found out that these drawbacks stem from an electrolysis effect taking place when the diamond wire is charged with a DC during operation of the wire saw device. In more detail, it turned out that the coolant acts as an electrolyte, the wire acts as an anode and the grounded diamond wire saw device frame acts as a cathode. The inventor further found out that no comparable harm happens to the steel wire in slurry based cutting processes.

The basis for the present invention is the idea that, if a direct current signal is applied to the diamond wire, the diamond wire could suffer from electrolysis effect due to the coolant medium, which is normally a water based liquid, such as water, possibly added by some coolant additives. Thereto in contrast, the carrier liquid used for slurry based sawing is oil or polyethylene glycol or the like, where an electrolysis effect does not take place. In summation, slurry based sawing does not suffer from such similar problems as diamond wire sawing does. It was therefore of no help for the further research of the inventor.

A way of overcoming the drawbacks in diamond wire sawing would be to a use liquid other than a water based liquid for the diamond wire sawing as well. However, this does not only increase the operating costs, it would also make necessary essential retrofitting and adapting of existing techniques and equipment.

In view thereof, the inventor found that the electrolysis effect can generally be massively reduced when applying an alternating signal to the diamond wire instead of a direct current signal. The present disclosure thus provides a wire defect detection system configured to apply an alternating voltage to the diamond wire. As used herein, the term "voltage at the wire" or "voltage of the wire" refers to the potential difference between the wire and the ground, such as the ground diamond wire saw device frame.

The alternating signal may be an alternating voltage, for instance, oscillating between a first voltage value and a second voltage value. The first voltage value may be, for instance, in the range of up to 10 V or only up to 5 V, such as 3 V, and the second voltage value may have a negative value and be, for instance, in the range of up to -10 V or even -5 V, such as -3 V.

According to embodiments, a signal measurement unit for measuring an electrical parameter at the diamond wire is provided. Typically, the electrical parameter is the voltage at and/or the current through the diamond wire. An analysis module may be provided and connected to the signal measurement unit. The analysis module is adapted for analysing the measured signals. In particular, the analysis module is adapted for comparing the measured signal with a selectable threshold value. If the measured signal underruns the selectable threshold value, the analysis module may diagnose this situation as abnormal condition. The analysis module may trigger a reaction, such as informing the control unit of the diamond wire saw device about the abnormal condition. When the measured signal remains above the selectable threshold value, the analysis module may diagnose this situation as normal condition.

According to embodiments, the alternating signal has the shape of a square wave. That is, the applied signal alternates between the substantially constant first voltage value and the substantially constant second voltage value. It is beneficial for the reduction of any electrolysis effects that the applied mean voltage is substantially zero. It should be understood that the term "substantially" in the given context typically includes a deviation of up to 100 mV or up to 10 mV in terms of voltage. In the event of a square wave voltage the absolute value of the substantially constant first value typically equals the absolute value of the substantially constant second value. For instance, the square wave voltage may oscillate between 3V and -3V. Herein, the term "absolute value" of a signal, such as the voltage, shall refer to the value of the signal irrespective of its sign. For instance, a square wave voltage oscillating between 3V and -3V has a constant absolute value of 3V as understood herein.

Providing a square wave alternating signal is beneficial in that it eases analysis of the resulting signal at the wire. In particular, as will be described in more detail below, the use of the coolant may result in a time-varying reduction of the measured voltage. So does a breakage of the diamond wire normally. Nevertheless, not every voltage decrease corresponds to a breakage of the wire. It is thus desired that the wire defect detection system, according to embodiments described herein, is capable of distinguishing quickly between a breakage and a voltage decrease that is not caused by a malfunction.

A square wave signal is beneficial in that the absolute value of the provided voltage is at its maximum at all times, except for the very short time it takes the sign of the voltage to change. In comparison to the sine wave form, which is often understood as "alternating signal" in publications in the field, this reduces the feedback time. For instance, the voltage of a sine wave is close to zero for a substantial amount of time around the zero-crossing. Evidently, a breakage occurring at that time is hard to determine because a signal can hardly be measured anyway. This effect can be reduced by using high frequency. However, the high frequency has the drawback that it causes electromagnetic interference and thus causes turbulences at equipment of the diamond wire saw device, such as sensors or the like.

Accordingly, an alternating voltage may be applied to the wire. In addition it turned out to be beneficial to use a low frequency between 1 Hz and 1 kHz, particularly between 1 Hz and 100 Hz, such as between 30 Hz and 50 Hz.

According to embodiments of the present disclosure, the absolute value of the voltage of the wire is controlled in such a way that it is substantially constant under normal operation conditions, that is, during those times when there is no substantial malfunction such as a breakage of the wire. The phrase "holding the absolute value of the voltage of the wire substantially constant" shall be understood in that the applied voltage is constantly adapted in order to provide for a substantially constant voltage in the wire. The term "substantially" in this context shall include deviations of less than 15%, maybe even less than 10%. Of course, since changing the sign of the voltage in an AC signal is without any impact on the absolute value only in theory, in practice there might be a short moment in time where the absolute value drops. This short drop, however, shall be embraced by the phrase "holding the absolute value of the voltage of the wire substantially constant".

Whereas known DC techniques apply a constant voltage to the wire, the resulting voltage at the wire differs essentially over time due to the time varying contact with the coolant. For instance, some known DC techniques apply 15 V to the wire whereas the voltage of the wire during operation of the diamond wire saw device varies, for instance, between 4 V and 7 V. The reason is, as will be explained in more detail below, the water-based coolant can be considered as an electrical conductor with a varying resistance that connects the wire with grounded parts of the wire saw device, such as, the wire saw device frame.

Thereto in contrast, according to some embodiments of the present disclosure, the voltage of the wire is controlled to a substantially constant absolute value. For instance, the operator of the diamond wire saw device might be given the opportunity to choose a substantially constant absolute value of the voltage at the wire, such as, for instance, 3V. This means that the power supply unit, and/or the control unit of the present disclosure, applies such a voltage signal to the wire that the resulting absolute value of the voltage at the wire is substantially at this constant value (provided no malfunctions are happening). For instance, if a voltage of 3 V is desired at the wire, the voltage applied by a power supply unit might vary between 5 V and 10 V. Thus, monitoring of the measured signal is eased essentially.

According to embodiments described herein, the methods of operating the diamond wire saw device can be conducted by means of computer programs, software, computer software products and the interrelated controllers, which can typically have a CPU, a memory, a user interface, and input and output being in communication with the corresponding components of the diamond wire saw device. These components can be one or more of the following components: motors, wire break detection units, wire tracking devices, and the like, which will be described in more detail below.

Typically, the diamond wire saw device includes at least two, typically four wire guides for transporting and guiding the diamond wire in a wire moving direction. For instance, the wire guides may be wire guide cylinders. The at least two guides each may be provided with at least one groove. The groove may include a surface for receiving the diamond wire that is electrically insulating. For instance, the wire guides may be covered with a layer of synthetic resin and are scored with grooves having very precise geometry and size.

In the diamond wire saw device, the diamond wire is typically wound around the wire guides and forms a web or wire web. During the sawing process, the wire is moved with considerable speed. The web generates a force opposite to the advance of a support beam or a support holding the piece to be sawed. During sawing, the piece to be sawed is moved through the wire web wherein the speed of this movement determines the cutting speed and/or the effective cutting area that can be sawed within a given amount of time.

The diamond wire saw device as disclosed herein is adapted to receive a diamond wire. The diamond wire saw device is not adapted to operate with an uncoated wire such as a standard steel wire. The sawing process with an uncoated wire further involves the use of slurry. For instance, the diamond wire saw device may differ from conventional slurry based steel wire saws by the form and shape of the used nozzles; by the tank for the coolant; by the shape, form and arrangement of pulleys for guiding the wire.

A wire saw control system may provide control of the diamond wire tension. The diamond wire provided forms a wire web in the cutting area of the wire saw. Thereby, the term "wire web" normally relates to the web formed by the diamond wire encircling repeatedly the wire guides. It should be understood that a wire web may contain more than one working area which is defined as an area in which a sawing process is performed. Thus, according to some embodiments described herein, a wire web can have multiple working areas that are formed by a wire.

For modem wire saws like croppers, squarers, or slicers, there is the desire to cut the hard material such as semiconductor material, for example, silicon, quartz, or the like, at high speed. The maximum wire speed, that is the maximum speed of the wire moving through the wire saw can be, for example, 10 m/s or even higher. Typically, the maximum wire speed can be in a range of 10 to 15 m/s. However, higher wire speeds, such as of 20 m/s, 25 m/s or 30 m/s can also be desirable. In embodiments, the movement of the diamond wire of the diamond wire saw includes a back-and-forth movement of the wire. The term "back-and-forth" movement as understood herein shall include at least one change in the direction of movement of the wire. Typically, the direction of movement of the wire is changed repeatedly in selectable time intervals so that the valuable diamond wire can be used for more cuttings than in the case of a continuous forth movement.

For unwinding the wire at the desired wire speed, the feed spool of unused wire rotates with a rotation speed of up to several thousands rotations per minute. For example, 1000 to 2000 rpm can be provided for unwinding the wire.

In embodiments, which can be combined with other embodiments described herein, the wires may have different diameters depending on the type of device. In an embodiment pertaining to a squarer, the wire diameter may be from about 80 µm to about 450 µm, e.g., 300 µm to 350 µm. In an embodiment pertaining to a wafer cutting wire saw, the wire diameter may be from 80 µm to 180 µm, more typically from 120 µm to 140 µm. For all of the former, a twisting of the wire might increase the risk of breaking the wire or of damaging the coating, so that a twist-free operation is advantageous.

By using diamond wire, the throughput may be increased by a factor of 2 or even more in comparison to conventional steel using slurry as abrasive. The speed with which the material to be sawed is moved relatively to the moving wire may be referred to as the material feed rate. The material feed rate in the embodiments described herein may be in the range of 2 µm/s to 15 µm/s, typically about 6 µm/s to 10 µm/s for a wafer cutting wire saw, respectively from 20 µm/s to 40 µm/s, typically from 28 µm/s to 36 µm/s for embodiments pertaining to a squarer.

According to typical embodiments, a multi-wire saw is used. Multi-wire saws allow for high productivity and high quality slicing of silicon wafers for the semiconductor and photovoltaic industries. A multi-wire saw includes typically a high-strength diamond wire that may be moved uni-directionally (i.e., only in the forward direction) or bi-directionally (i.e., backwards and forwards) to perform the cutting action.

The diamond wire may be wound on wire guides, which are normally grooved with constant pitch, forming a horizontal net of parallel wires or wire web. The wire guides are rotated by drives that cause the entire wire-web to move at a relatively high speed of, for instance, 5 to 20 m/s. If desired, at least one or more inlets, such as one or more high flow-rate nozzles may feed the moving diamond wires with coolant. The inlets are configured for directing water-based coolant to the diamond wires. In particular, the inlets may have nozzle openings with a diameter configured for water-based media only. The nozzle outlets are typically too small for the injection of oil-based liquid or any liquid having abrasive additives.

During the cutting action, the ingot may be pushed through the wire web. Alternatively, the ingot may be stationary while the wire web is pushed through it.. A wire feed spool provides the required new diamond wire and a wire take-up spool stores the used diamond wire. The embodiments described herein are particularly useful for squaring of ingots, i.e., shaping the ingot into squared blocks (wherein the "squared" blocks typically have rounded comers; the squared blocks are sometimes called "bricks" whereas they are referred to as "ingots" herein as well). The embodiments described herein can also be used for wafering of ingots, i.e., slicing the squared blocks into wafers. In the following, it is referred to these embodiments by the phrases "cutting the ingot" or "cutting the wafers".

Normally, after traveling through the entire diamond wire saw device, the diamond wire exits the operation area of the diamond wire saw device at a diameter reduced in comparison to its initial diameter before the sawing process. The wear in diamond wire is process dependant. In particular, the higher the cut rate, the higher the diamond wire wear. Also, the higher the wire usage (length of diamond wire used for a given application), the lower the wear is. Since on the one hand the wire wear increases the wire breakage probability and, on the other hand, the wire usage increases the costs of manufacturing a wafer, the present disclosure desires to control the usage of the wire for an optimized process at minimum overall costs. In particular, it is desired to avoid negative impact on the diamond wire and thus the cutting process as a result of the monitoring for diamond wire defects.

According to aspects of the present disclosure, the diamond wire is inspected during the sawing operation by applying an alternating voltage signal thereto. The measurement, and possibly a subsequent analysis, allows immediate reacting, such as amending one or more of the operation parameters. In particular, it allows stopping the diamond wire saw device.

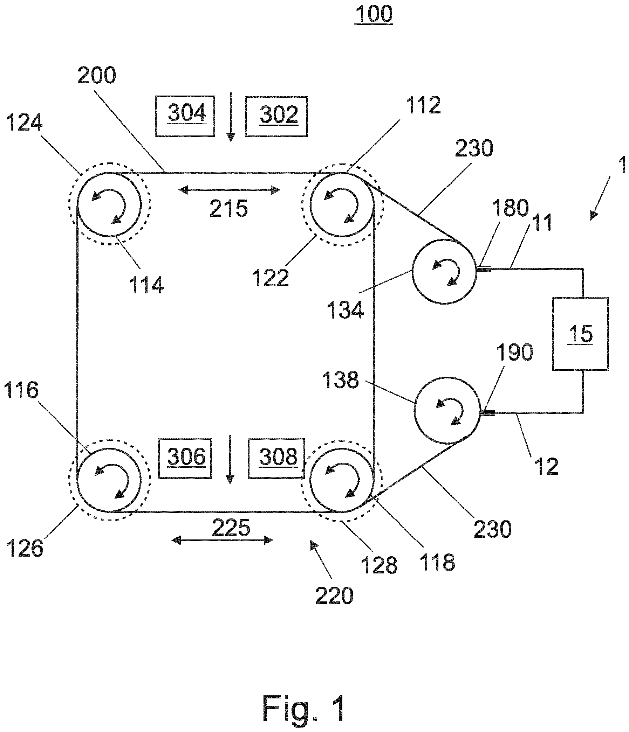

Fig. 1 shows a schematic side view of a diamond wire saw device 100 including a diamond wire defect detection system 1. The diamond wire defect detection system may include a power supply unit 15 that may be directly or indirectly electrical conductively connected to the diamond wire 230. For instance, as shown in Fig. 1, the power supply unit 15 of the defect detection system 1 may have an electrical conductive connection line 11 that is connected to the wire feed spool 134, and it may have an electrical conductive connection line 12 that is connected to the wire take-up spool 138. In this case it is understood that the wire feed spool and the wire take-up spool have an electrical conductive surface. The power supply unit is adapted to provide for an alternating current (AC) signal. Furthermore, as an example for contacting the spools 134 and 138 to the power supply unit 15 via electrical conductive connection lines 11 and 12, Fig. 1 illustrates contact brushes 180 and 190. The brushes are not illustrated in other figures shown herein only for reasons of clarity, although it shall be understood that contact brushes can be provided according to all embodiments described herein.

The wire saw 100 has a wire guide device including four wire guide cylinders 112, 114, 116, 118. The wire guide cylinders 112, 114, 116, 118 may be covered with a layer of synthetic resin, and are scored with grooves having very precise geometry and size. Each wire guide cylinder 112, 114, 116, 118 may be connected to a motor or drive 122, 124, 126, 128 (shown in dashed lines in Fig. 1). Each motor may be adapted for performing a back-and-forth movement of the wire. The back-and-forth movement of the wire is denoted with reference numbers 215, 225 in the Figures. In embodiments, as those shown in Fig. 1, wire guide cylinders 112, 114, 116, 118 are directly driven by motors 122, 124, 126, 128. The one or more motors are typically controlled by the wire saw control.

During the cutting action, one or more ingots 302, 304, 306, 308 may be pushed through the wire web in order to slice them. This is indicted by the arrows sandwiched between ingots 302, 304, and 306, 308, respectively. Typically, the one or more ingots are supported by a table (not shown) which can be moved with a speed which is called "table speed" herein. The table speed may also be referred to as feed rate. Generally, and not limited to any specific embodiment described herein, the table speed may be synchronized with the wire speed. In particular, once the wire is stopped, also the table speed may be reduced to zero. Alternatively, the ingots 302, 304, 306, 308 may be stationary while the wire web is pushed through it. According to embodiments, the one or more ingots are sliced into a multitude of wafers, such as at least 500 or even more. Typical lengths of the ingots are in the range of up to 250 mm, in particular in the case of multi-crystalline Silicon, and up to 500 mm, in particular in case of mono-crystalline Silicon.

According to typical embodiments, the wire feed spool 134 is provided with a diamond wire 230 reservoir. The wire feed spool 134, if still complete, typically holds several hundred kilometers of diamond wire. The diamond wire 230 is fed to the guide cylinders 112, 114, 116, 118 from the wire feed spool 134. The wire take-up spool 138 may be provided, upon which the used diamond wire 230 is recoiled. In the embodiment shown in Fig. 1, the rotational axis of wire feed spool 134 and take-up spool 138 are parallel to the rotational axes of the wire guide cylinders 112, 114, 116, 118. Accordingly, typically no deflection pulley or similar device is required for feeding the wire to the wire guide 110. Due to the zero degree angle on the wire, the risk of wire breakage can be reduced. Typically, further devices such as low inertia pulleys (not shown) and tension arms (not shown), for wire tension regulation with optional digital coders on the tension arms, may be provided.

The diamond wire 230 is spirally wound about the wire guide cylinders 112, 114 and forms a layer of parallel wires between the two wire guide cylinders. This layer is typically referred to as a wire web 200. According to the embodiments illustrated, four wire webs are provided. Sawing takes place using at least one wire web, typically two wire webs at the same time (as illustrated in Fig. 1). The number of parallel wire portions typically corresponds to the number of slicing processes. For instance, the wire may be wound up in such a way that the resulting wire web includes 100 wire portions arranged in parallel. An ingot pushed through this web of 100 wires is sliced into 101 wafer pieces. The motors driving the wire are typically motors having a small momentum in order to stop and accelerate within a short time period.

According to some embodiments, which can be combined with other embodiments described herein, two or more spools are provided for forming at least one wire web. For example, two, three or even four spools can be used to provide the wire. Typically, each of the two, three or even four wire feed spools are connected to the diamond wire defect detection system. Accordingly, each of the two, three and four wire take-up spools, respectively (the number of take-up spools corresponds to the number of wire feed spools), are typically connected to the diamond wire defect detection system.

Compared to a single wire system, the load on each diamond wire can be reduced by having two or more wire feed spools/wire take-up spools and, thus, two or more wires. In other words, for a single wire web the load is increased as compared to a dual wire web, due to the increase of the wafer surface to wire surface area. The increased load can result in lower cutting speeds. Accordingly, using two or more wires can increase the cutting speed, e.g., such that an effective cutting area or a cutting area rate of 12 m²/h or more can be provided. According to embodiments described herein, stopping the operation of the diamond wire saw device shall be understood as stopping the wire movement of all diamond wires in the diamond wire saw device, that is, also the diamond wire that is not broken is stopped in this case.

According to the described embodiments, an alternating voltage signal is provided at the wire. Typically, the wire feed spool is provided with a first electrical connection and/or the wire take-up spool is provided with a second electrical connection. That is, an electrical potential is formed between the diamond wire position at the wire feed spool and the wire position at the wire take-up spool. Consequently, a current flows between the first and the second electrical connection defined by the resistance between the first and the second electrical connection.

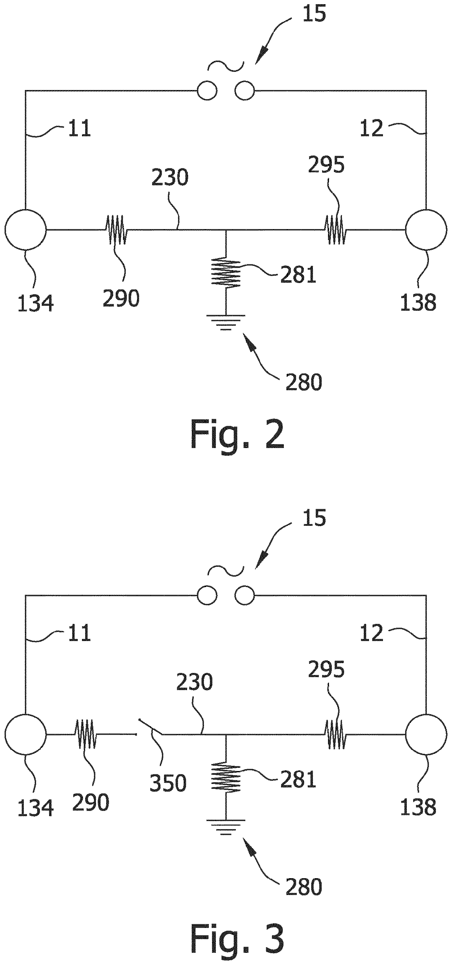

Fig. 2 shall illustrate an equivalent circuit diagram of the diamond wire saw device according to embodiments described herein. The power supply unit 15 provides an alternating voltage via the electrical conductive connection lines 11 and 12 to the wire feed spool 134 and wire take-up spool 138, respectively. The wire feed spool 134 is electrically connected to the wire take-up spool via the diamond wire 230. The diamond wire 230 has an electrical resistance, which is schematically illustrated by the resistances 290 and 295 in Fig. 2. A typical resistance of the diamond wire is in the range of between 0.5 Ω/m and 10 Ω/m, in particular between 2 Ω/m and 4 Ω/m.

Furthermore, the diamond wire is cooled during the operation of the diamond wire saw device by means of a coolant. This may constitute an electrical contact to the ground 280. The contact has a time varying resistance 281. For instance, the electrically conductive coolant might provide for an uninterrupted connection to grounded parts of the diamond wire saw device for some moments in time, which results in an increased current through the wire. At other times, when there is only contact between the coolant and the isolated ingots, the current through the diamond wire is mainly defined by the resistances 290 and 295 of the diamond wire itself.

Fig. 3 shall illustrate an embodiment where an open switch 350 is illustrated in the diamond wire. In other words, the diamond wire does not provide for a continuous connection between the two poles of the power supply unit 15. This corresponds to a wire breakage where the current through the diamond wire ceases. According to embodiments, the operation of the diamond wire saw device is immediately stopped. According to other embodiments discussed below in more detail, the applied voltage is increased for a selectable time interval before the operation of the diamond wire saw device may be stopped.

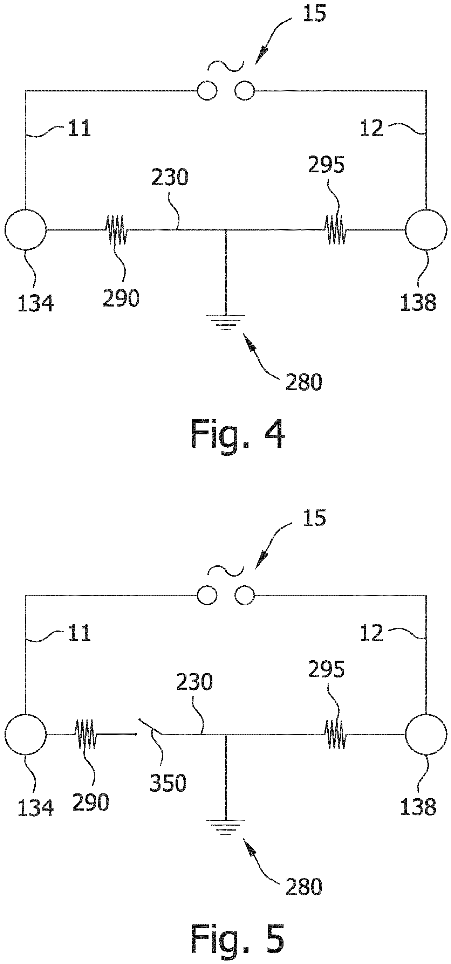

Fig. 4 shall illustrate an embodiment where the resistance 281 is omitted as compared to the diagram of Fig. 2. The shown equivalent circuit diagram illustrates a situation where the contact between wire and ground is resistance-free resulting in a high current or a short circuit (depending on the resistances 290 and 295) between the power supply unit 15 and the ground 280 via the diamond wire and the coolant. According to this scenario, the coolant provides for a continuous contact to one or more conductive parts of the diamond wire saw device thus establishing a contact line. Typically, such a scenario happens, if at all, only for short times, such as below ls or the like.

Fig. 5 shall illustrate an embodiment where the resistance 281 is omitted as compared to the diagram of Fig. 2, and furthermore an open switch 350 is shown as in the equivalent circuit diagram of Fig. 3. The shown equivalent circuit diagram of Fig. 5 illustrates a situation where the contact between wire and ground is resistance-free, and at the same time the wire has a broken position corresponding to the open switch 350. Such a situation may arise when the wire is broken in such a way that it contacts one or more conductive and grounded parts of the diamond wire saw device. This situation will result in a high current or a short circuit between the power supply unit 15 and the ground 280 via the diamond wire 230.

Evidently, the situations corresponding to Fig. 3 and 5 constitute a malfunction of the diamond wire saw device. If any such situation arises, the cutting should be stopped in order to avoid further damage to the diamond wire saw device.

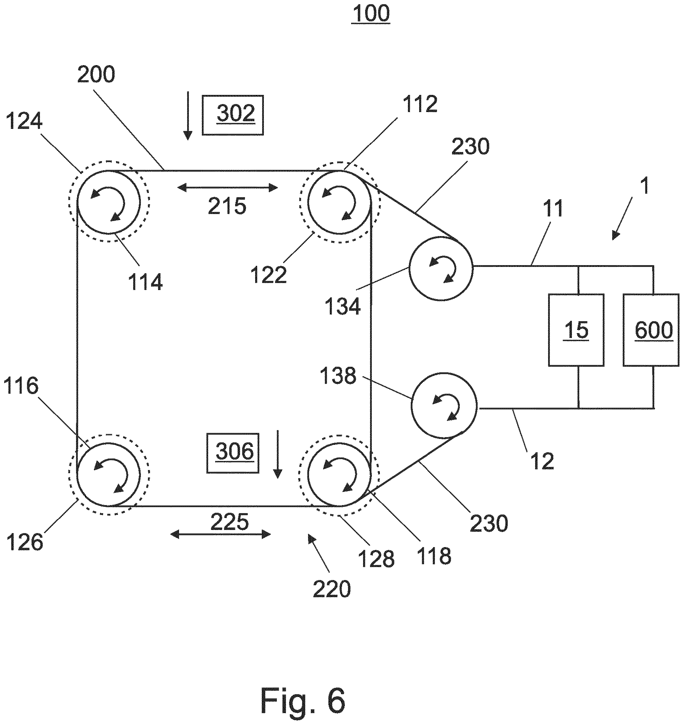

Fig. 6 illustrates an embodiment of the diamond wire saw device described herein wherein, further to the elements shown in Fig. 1, a signal measurement unit 600 for measuring an electrical parameter at the diamond wire is illustrated. For instance, the signal measurement unit 600 may be a voltmeter and/or an ammeter. It is adapted to measure the electrical signal between the ends of the diamond wire 230. It may be contacted with the diamond wire 230 via a direct connection line to the spools, i.e., the wire feed spool and/or the wire take-up spool, or it may be contacted with the diamond wire via the electrical conductive connection line 11 and/or the electrical conductive connection line 12.

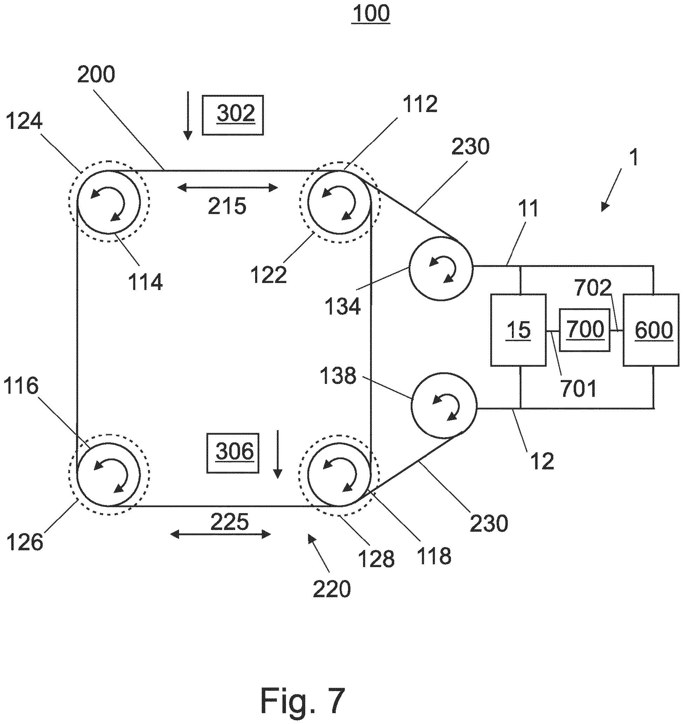

Fig. 7 illustrates an embodiment wherein further to the elements shown in Fig. 6 a control unit 700 is shown. The control unit 700 may have a data connection to the power supply unit 15 and/or the signal measurement unit 600. The control unit may be a digital device, for instance, a computer including an input unit such as, for example, a mouse and/or a keyboard, a display unit such as, for example, a screen, a computing unit such as, for example, a CPU (central processing unit) and a memory unit such as, for example, a nonvolatile memory, for example, a hard disk and/or a volatile memory such as, for example, a RAM (random access memory). The control unit may be programmed by an operator by means of, for instance, a touch-screen or a screen in combination with a keyboard and/or a mouse. Alternatively, the control unit 700 may be an analog device that is typically preprogrammed.

As described, the diamond wire defect detection system may further be provided with an analysis module for analyzing the measured signal. The analysis module may particularly trigger a reaction if it diagnoses an abnormal condition. The analysis module may be part of the measurement unit 600 and be embedded therein. Alternatively, the analysis module may be part of the control unit 700 and be embedded therein. Alternatively, the analysis module may be a separate unit (not shown) that is in operative connection with at least one of the control unit (700) and the measurement unit (600).

The control unit 700 may provide information about the voltage to be generated to the power supply unit 15 via the connecting data line 701. Generally, and not limited to any embodiment, the control unit 700 may be responsible for the supply of the voltage, that is, the power supply unit 15 may be integrated in the control unit 700. The measured signals of the signal measurement unit 600 are communicated to the control unit 700 via the connecting data line 702. Generally, and not limited to the presently discussed Figure, the control unit, the power supply unit, and/or the signal measurement unit may be separate devices. Alternatively, they may be integrated in one device. The communication between the control unit, the power supply unit and/or the signal measurement unit may be established via peer-to-peer connection. Alternatively, it may be established via a wired or wireless network. The control unit 700 is adapted to analyze the measured signals of the signal measurement unit 600 during operation of the wire saw. If the wire exhibits any physical condition that is defined as non-normal, the control unit detects the change and triggers a reaction.

In embodiments, the control unit immediately causes the operation of the diamond wire saw device to stop in case of an abnormal condition, in order to prevent undesirable consequences which may result from a further operation with a wire defect. It is furthermore possible that the control unit additionally signals an alarm. The alarm signal is typically signaled acoustically, e.g. by means of a beeper, a horn, or a loudspeaker and may also be signaled optically by means of a light emitting device. The unit may also send a signal to an operator screen or an external device via a computer network or the like.

Typically, an abnormal condition is defined in that the measured signal underruns a selectable threshold value. For instance, the measured signal may be the measured voltage at the wire. Alternatively, the current flowing through the wire could be measured. The selectable threshold value may be, for instance, in the range of between 0.1 V and 5 V, more particularly between 0.1 V and 1 V. Generally, the selectable threshold value may be in the range of between 5% and 80% of the applied voltage, in particular between 30% and 50%.

Alternatively to the immediate stop of the diamond wire saw device that is typically initiated as a reaction to a measured voltage and/or current drop, the applied voltage may be increased for a selected time interval. That is, according to embodiments, the diamond wire defect detection system of the diamond wire saw device may include a voltage increase module adapted for increasing the applied alternating voltage in response to a decreasing measured signal. Thereby, the phrase "increasing the voltage" shall be understood as increasing the absolute value of the applied voltage. It is typical that the applied frequency remains unchanged.

By increasing the voltage, for the situation in which the wire is not broken, one can expect that a signal is immediately measurable again. For instance, the signal may have vanished because, for instance, the coolant provided a continuous contact to an electrically conducting part of the diamond wire saw device. If the measured signal is back to normal again, for instance, if it is again above a selectable threshold value, the operation of the diamond wire saw device can be continued. In particular, the increased voltage may be decreased again to the value it had before the increase. If, despite the increase of the applied voltage, the signal is still abnormal (e.g., below a selectable threshold value), then the operation of the diamond wire saw device is stopped.

The time interval for which the applied signal is increased before a stop of the diamond wire saw device is considered (so-called "time-out") may be selectable between 1 ms and Is, typically between 1 ms and 200 ms. The length of the time interval has to be balanced between the costs of a stop of the diamond wire saw device, because of an incorrect breakage diagnosis, and the costs of an ongoing operation of the wire saw device with a broken wire.

That is, the present disclosure provides for an improved defect detection diagnosis. The improved diagnosis includes analyzing the measured signal and, in the event of a measured signal that is indicative of an abnormal condition, increasing the applied signal. According to typical embodiments, the applied and/or the measured signal is the voltage. Typically, the abnormal condition is diagnosed when the measured signal underruns a selectable threshold value. In such a case, the diamond wire defect detection system is configured to wait for a selectable time interval as described previously. If the measured signal does not overrun the threshold value in response to the increasing of the applied signal, such as the applied voltage, the operation of the diamond wire saw device is stopped.

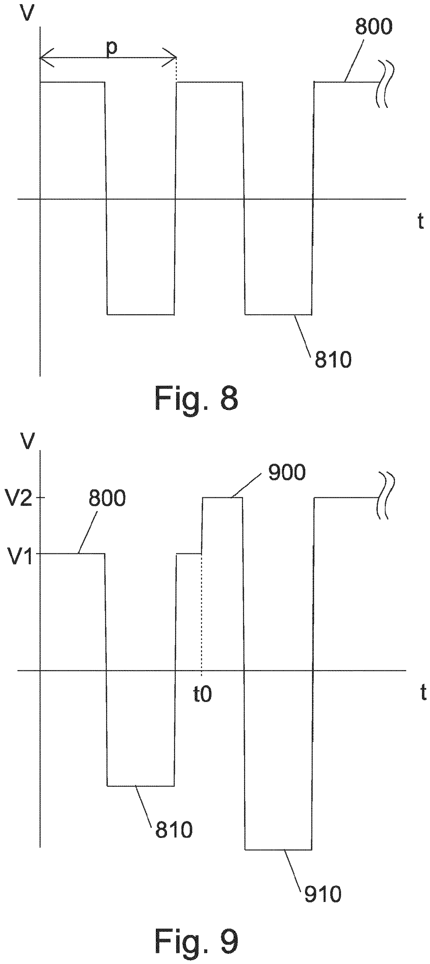

Fig. 8 illustrates the controlled voltage of the diamond wire, according to embodiments described herein, during operation of the diamond wire saw device. Whereas the abscissa represents the time t, the ordinate represents the resulting voltage V at the diamond wire. The control of the voltage at the diamond wire is such that it oscillates between the two values 800 and 810. Typically, and not limited to the embodiment illustrated in Fig. 8, the average value of the voltage over the time period of a complete period p is zero, or substantially zero. In other words, the controlled voltage typically oscillates between a constant first voltage value and a constant second voltage value. The second voltage value and the first voltage value typically have the same absolute value of the voltage but typically have the opposite sign. The period p corresponds to the inverse of the frequency. For instance, if the frequency of the applied signal is 40 Hz, the period p is 1/40 sec.

Thus, according to typical embodiments of the present disclosure, the average of the controlled voltage is zero.

Fig. 9 illustrates a voltage signal of the diamond wire according to embodiments described herein. Whereas the abscissa represents the time t, the ordinate represents the voltage V that is present at the diamond wire. As previously described with respect to the embodiments illustrated in fig. 8, the voltage of the diamond wire oscillates between the two values 800 and 810. This is the standard operation of the diamond wire saw device where the value of the voltage 810 is typically the negative of the voltage 800.

At time t0, however, an abnormal condition is measured. For instance, an essential drop of the measured voltage and/or the measured current is monitored. According to embodiments described herein, the diamond wire saw device is immediately stopped. However, according to alternative embodiments described herein and exemplarily illustrated in Fig. 9, the applied voltage is instantly increased. For instance, whereas the absolute value of the resulting voltage was V1 under normal operation, the absolute value of the controlled voltage is increased to V2 as soon as the abnormal condition is measured. At the time t0 the voltage is increased to V2, which is referred to as line 900 in the diagram of Fig. 9. Typically, the frequency of the voltage remains constant but it is also possible that it is amended. Furthermore, the shape of the controlled voltage, such as the square wave form illustrated in Fig. 9, may also remain constant.

Typically, the increase of the absolute value of the applied voltage is limited to a selectable time interval. For instance, the operator of the diamond wire saw device may select the length of the time interval. If despite the increase of the applied alternating signal there is still no measurable response, this can be interpreted as abnormal condition and the diamond wire saw device is stopped. If, however, the measured response returns to a normal state, for instance, overruns the selectable threshold value again, the operation of the diamond wire saw device can be continued. In this case, the absolute value of the controlled voltage may immediately be set to the voltage value as under normal operation (e.g., voltage 800 in Fig. 9), or the absolute value of the voltage may be reduced over a multitude of periods, such as between 5 and 10 periods. That is, the absolute value of the voltage may be steadily decreased over a multitude of periods after an increase of the voltage until it reaches the voltage as under normal conditions.

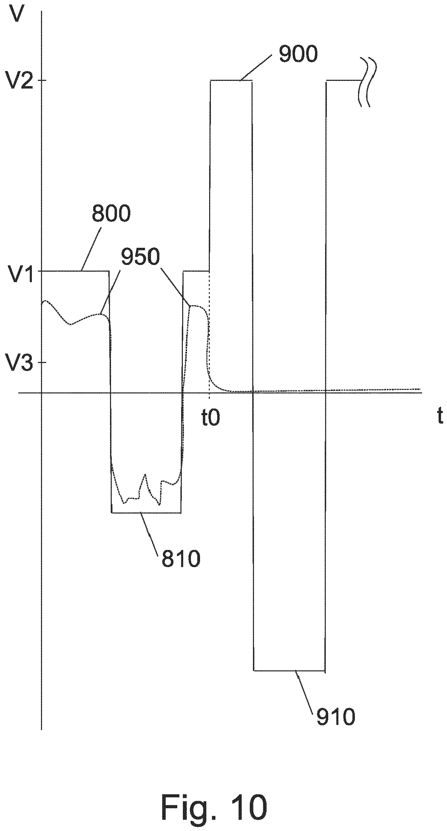

Fig. 10 shows a similar embodiment as depicted in Fig. 9. In contrast to Fig. 9, the increase of the voltage at time tO is larger. Generally, and not limited to the embodiment of Fig. 10, the voltage increase in case of an abnormality can be of up to 300% or up to 250% of the controlled voltage as under normal conditions. Furthermore, the measured voltage of the wire is shown by the dashed line 950. As illustrated, the measured voltage is above the threshold value V3 before the time t0. Then, a breakage of the wire happens resulting in a drop of the measured voltage 950. Even after an increase of the applied voltage at the wire, the measured voltage remains vanished. Consequently, this situation has to be interpreted as a wire breakage by the control unit. That is, after a preselected time interval ("time-out"), the diamond wire saw device will automatically stop the operation and possibly automatically initiate an alarm or the like.

The presently disclosed diamond wire saw device and method of operation thereof reduces the occurrence of diamond wire damages essentially as compared to the technique known in the art to apply a DC to the wire. Consequently, the number of machine stops due to wire breakages can be reduced. The overall throughput of the wire can thus be massively increased. The amount of nickel plating on the diamond wire can be reduced. By applying a square wave voltage, the diagnosis and monitoring is furthermore eased. By employing the optional increase of the applied voltage in case of a measured abnormal signal, the number of wrong diagnosis and thus unnecessary machine stops can furthermore be reduced. By employing this method, the number of false alarms tends so be zero.

While the foregoing is directed to embodiments of the invention, other and further embodiments of the invention may be devised without departing from the basic scope thereof, and the scope thereof is determined by the claims that follow.

## Claims

1. A diamond wire saw device (100) for cutting an ingot (302, 304, 306, 308) by means of a diamond wire (230), wherein the diamond wire saw is adapted to move the diamond wire relatively to the ingot, the diamond wire saw device comprising:
a diamond wire defect detection system (1) configured to apply an alternating signal to the diamond wire (230).

2. The diamond wire saw device according to any of the preceding claims, wherein the AC signal is a square wave signal (800, 810, 900, 910).

3. The diamond wire saw device according to any of the preceding claims, further comprising a signal measurement unit (600) for measuring an electrical parameter at the diamond wire, in particular the voltage at the diamond wire.

4. The diamond wire saw device according to claim 3, further comprising an analysis module in operative connection with the signal measurement unit (600), wherein the analysis module is adapted for analysing the measured signals.

5. The diamond wire saw device according to any of the preceding claims, further comprising a voltage increase module adapted for increasing the absolute value of the applied alternating voltage in response to a measured signal indicative of an abnormal condition.

6. The diamond wire saw device according to any of the preceding claims, wherein the AC signal has a frequency of between 1 and 100 Hz, particularly between 30 and 50 Hz.

7. The diamond wire saw device according to any of the preceding claims, further including an inlet for directing a water-based coolant to the diamond wire during operation of the diamond wire saw device.

8. A method for operating a diamond wire saw device for cutting an ingot, the diamond wire saw device including a diamond wire, the method comprising:
a) applying an alternating signal to the diamond wire; and
b) measuring the response signal of the diamond wire.

9. The method according to any of claim 8, wherein the applied alternating signal is a square wave alternating signal.

10. The method according to any of claims 8 and 9, further comprising directing a water-based coolant to the diamond wire during operation of the diamond wire saw device.

11. The method according to any of any of claims 8 to 10, wherein applying an alternating signal to the diamond wire includes controlling the signal at the diamond wire at a substantially constant absolute value of the signal.

12. The method according to any of claims 8-11, further comprising
a) analyzing the measured signal; and
b) in the event of a measured signal that is indicative of an abnormal condition, increasing the applied signal.

13. The method according to claim 12, wherein the applied signal is increased if the measured signal underruns a selectable threshold value.

14. The method according to claim 13, further comprising
a) waiting a selectable time interval; and
b) stopping the operation of the diamond wire saw device if the measured signal does not overrun the threshold value in response to the increasing of the applied signal.

15. A method for retrofitting a diamond wire saw device with a diamond wire defect detection system, wherein the diamond wire saw device includes a diamond wire, the method comprising:
a) providing the diamond defect detection system configured to apply an alternating signal to the diamond wire; and
b) bringing the diamond wire defect detection system in electrical conductive contact with the diamond wire.
